# EUROPEAN PATENT SPECIFICATION

(11) **EP 2 999 651 B1**
(45) Date of publication and mention of the grant of the patent: **01.04.2020**
(21) Application number: 13745909.5
(22) Date of filing: 22.05.2013
(51) Int. Cl.: B65G 47/96

(54) **SORTING CONVEYOR WITH LUMINOUS INDICATOR FOR MANUAL LOADING**
SORTIERFÖRDERER MIT LEUCHTINDIKATOR ZUM MANUELLEN BELADEN
CONVOYEUR DE TRIAGE DOTÉ D'UN INDICATEUR LUMINEUX POUR LE CHARGEMENT MANUEL

(43) Date of publication of application: 30.03.2016
(73) Proprietor: Dematic S.R.L., 20063 Cernusco sul Naviglio (Milano) (IT)
(72) Inventor: CARVELLI, Marco, I-20063 Cernusco sul Naviglio (Milano) (IT)
(74) Representative: Moser Götze & Partner Patentanwälte mbB
(86) International application number: PCT/IT2013/000144
(87) International publication number: WO 2014/188456

(56) References cited:
- EP-A1- 2 384 825
- DE-A1-102004 014 378
- DE-A1-102006 057 266
- US-A1- 2002 179 502

## Description

### Technical Field

The present invention, according to its more general aspect, relates to the object handling sector and to meeting the need for sorting objects.

More particularly, it relates to an object handling system, comprising a loading area, a continuous type conveyor, a plurality of discharge chutes arranged at intervals along the sides of the conveyor, a plurality of carriages, each carriage having at least one pair of adjacent seats for receiving at least one object and movable along the conveyor from a position in correspondence of the loading area, for receiving at least one object arriving into the loading area, to a position in correspondence of a discharge chute, for unloading into the discharge chute the at least one object, as well as a control apparatus able to recognize the at least one object arriving from the loading area and cause unloading of the at least one object from the seat into the chute when the carriage is located in correspondence of the discharge chute towards which the at least one object is to be conveyed.

### Background Art

When an automatic object handling device is present in the loading area, the control apparatus also controls this device and loads the object into a predefined seat, for example a seat which is located on the side of the carriage facing the same side of the conveyor which accommodates the discharge chute towards which the object is to be conveyed. In these conditions the system operates in a satisfactory manner.

DE 10 2006 057 266 A1 discloses an object handling system according to the preamble of claims 1-3 for sorting article units in accordance with customers' orders, the system having a high sorting performance and comprising: a rotary sorting conveyor, which may be closed, having a conveyor means, wherein the conveyor means is connected to a plurality of receiving devices, to which the article units are to be delivered. A plurality of target positions is coupled to the sorting conveyor and can supply articles units to the receiving devices in accordance with a customer's order, wherein the target positions are assigned to customers' orders. At least one filling station manually fills the receiving devices by article units, wherein the filling station includes a plurality of filling chutes each having an opening mechanism at its lower end thereof, in order to allow supply of article units, which are order picked into the filling bucket, to the receiving devices in an automated manner. The filling chutes may have luminous indicators for indicating to the picker which chute to put articles into.

US 2002/0179502 A1 discloses an article sortation system includes a plurality of transport units which are movable along a conveying path between induction stations and discharge stations along each side of the conveying path. Each transport unit has side by side loading and support capability and is operable to receive packages from induction stations and discharge the packages at an appropriate discharge station. The system includes a control which determines the destination of articles and resolves blocking conditions between articles at the induction stations or at the transport units. The system may include a reinduction station for receiving an article from a transport unit and reinducting the article onto a transport unit, in order to resolve a blocking condition between a pair of articles on the respective transport unit.

However, problems arise when, for any reason, the automatic object handling device is not present or is no longer functioning. This situation may be remedied by means of an operator who is present in the loading area and manually deposits in the carriage seats the objects arriving in the loading area. While satisfactory in certain respects, this method of proceeding has the drawback that often the carriage does not manage to unload the object into the chute for which the object is intended, for example when the object has been placed by the operator in a right-hand seat when instead it is intended for a left-hand chute. When this situation occurs, the control apparatus cannot issue the command for unloading the object into the chute for which it is intended. The object cannot be unloaded and necessarily the apparatus issues a command for the carriage to convey it to a recovery chute from where the unloaded objects are transported back to the loading area so that they may be sorted again.

It is clear at this point that the drawback, which hitherto has had to be tolerated, is that of a slowing down of the object sorting operation as a result of the additional distance needlessly travelled by the objects which could not be unloaded the first time round.

The problem underlying the present invention is that of providing a system of the type mentioned, which is able to satisfy the need described above while at the same time overcoming the drawbacks of the systems of the prior art.

### Disclosure of Invention

This problem is solved by a system according to independent claims 1, 2 and 3. With the system of the invention a luminous indicator is associated with each seat, visible to an operator who is standing in the loading area, and selectively activated by the control apparatus so as to indicate to the operator the seat of said at least one pair of seats in which said at least one object should be manually deposited by the operator.

In the system of claim 1, the luminous indicator is a luminous spot formed by a light beam emitted by a light source directed towards the visible surface of each seat and activated by the control apparatus.

In the system of claim 2, the luminous indicator is a light source arranged underneath each seat and visible through said seat.

In the system of claim 3, the luminous indicator is a luminous frame element extending along at least one peripheral portion of each seat.

Advantageously according to the invention, each seat may be provided with unloading means which are controlled by the action of drive means for unloading the at least one object into the chute.

Moreover, the unloading means may comprise a conveyor belt associated with each of said seats.

Finally, the unloading means may comprise a conveyor belt associated with said pair of seats.

The problem is also solved by a method according to claim 7.

Further characteristic features and advantages of the system according to the present invention will emerge from the following description of an example of embodiment thereof, provided by way of a non-limiting illustration, with reference to the accompanying figures, in which:

### Brief Description of Drawings

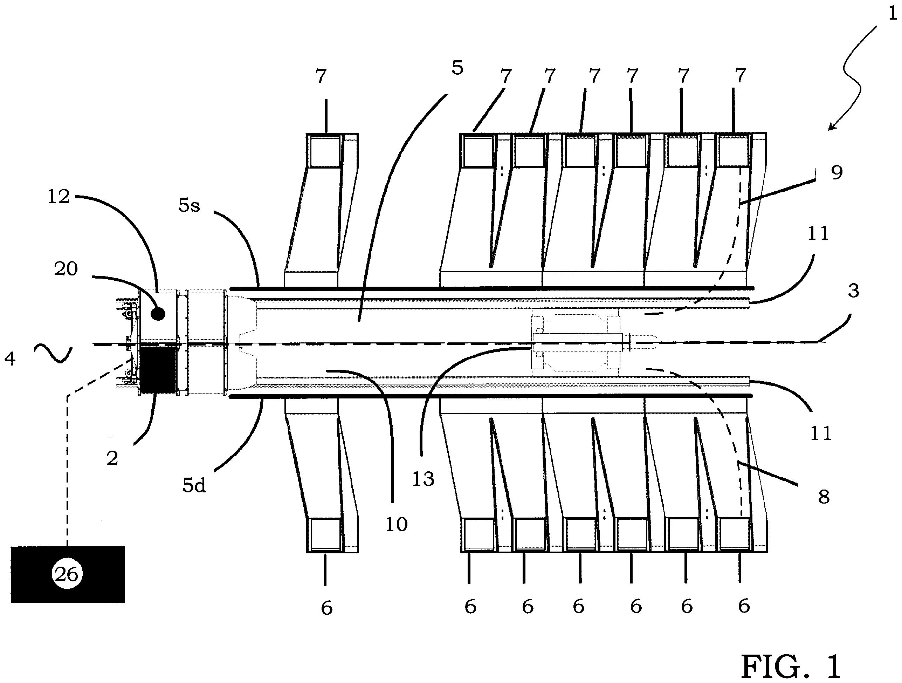

Figure 1 shows a schematic view, from above, of a system according to the invention;
Figure 2 shows a perspective view, on a larger scale, of a detail of the system according to Figure 1;
Figure 3 shows a perspective view of an alternative embodiment of the detail of the system according to Figure 2;
Figure 4 shows a perspective view of a further alternative embodiment of the detail of the system according to Figure 2;

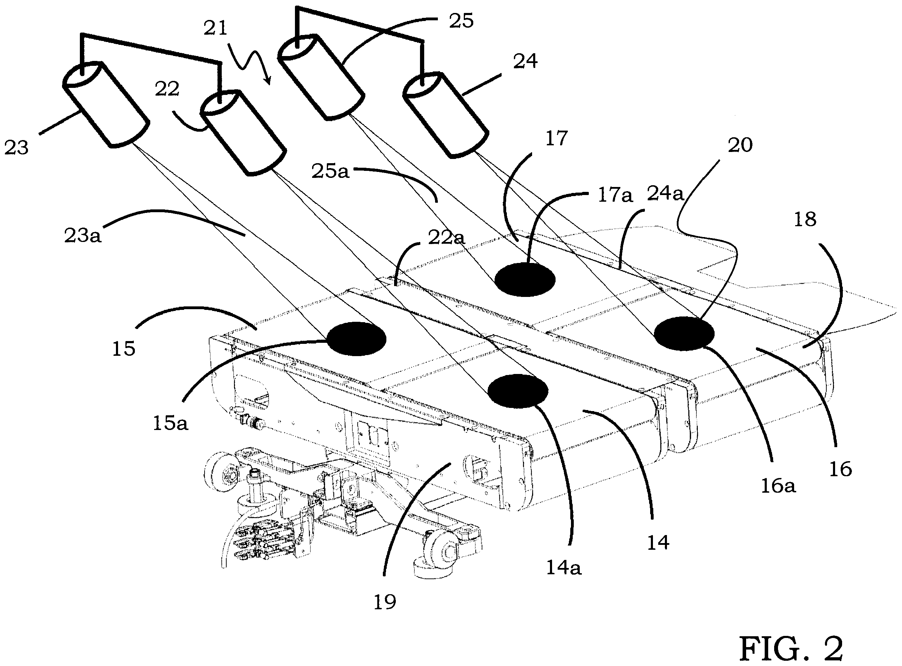

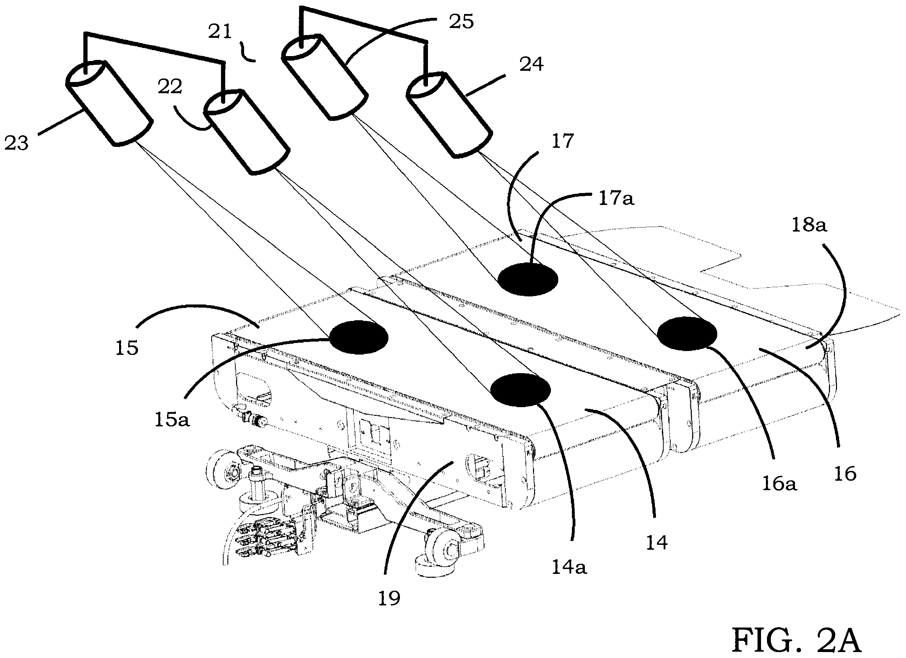

Figures 2A, 3A and 4A show perspective views of variations of the embodiments shown in Figures 2, 3 and 4, respectively.

### Modes for Carrying Out the Invention

With reference to the accompanying drawings, 1 denotes overall an object handling system, for sorting objects 2, for example parcels, baggage and the like. The system 1, along which a travel path 3 for objects to be sorted extends, comprises a loading area 4 and a conveyor 5 arranged along the travel path 3. In particular, the conveyor 5 is of the continuous type with an active section extending along the travel path 3. The system 1 also comprises a plurality of chutes which are arranged along both sides of the conveyor 5, and precisely a plurality of chutes, all denoted by 6, arranged along the right-hand side of the conveyor, in turn denoted by 5d, and a plurality of chutes, all denoted by 7, arranged along the left-hand side of the conveyor, in turn denoted by 5s.

A plurality of travel paths for sorted objects, all denoted by 8, depart from the right-hand side 5d of the conveyor 5, said paths being substantially perpendicular to the travel path 3, substantially parallel to each other and extending along the chutes 6. Similarly, a plurality of travel paths for sorted objects, all denoted by 9, depart from the left-hand side 5s of the conveyor 5, said paths being substantially perpendicular to the travel path 3, substantially parallel to each other and extending along the chutes 7.

As regards the loading area 4, it should be pointed out that the objects 2 to be sorted are brought into said area, via means which are not shown in the figure and which are entirely conventional, one after another, at a predefined rate as required.

With regard to the conveyor 5, it should be pointed out that it comprises an elongated frame 10 provided above with guides 11. A carriage 12 is slidably mounted along the guides 11 and is movable at a predetermined slow and constant speed along said guides, controlled by drive means 13.

It should be noted that at least two adjacent seats, preferably two pairs of two adjacent seats, are arranged on the carriage 12. In particular, with reference to Figure 2, the carriage 12 has, arranged thereon, a first pair of adjacent seats, with one seat 14 arranged on the right-hand side 5d of the conveyor 5 and one seat 15 arranged on the left-hand side 5s of the conveyor 5, as well as a second pair of seats, and in particular a seat 16 arranged on the right-hand side 5d of the conveyor 5 and a seat 17 arranged on the left-hand side 5s of the conveyor 5.

Each seat is designed to receive, placed thereon, an object 2 when the carriage 12 is situated in correspondence of the loading area 4. Each seat is also designed to unload the object 2 which it carries when it is situated in correspondence of a predefined chute. For this purpose each seat is provided with unloading means 18, in the example a conveyor belt, controlled by the action of drive means 19.

In accordance with the invention, the system 1 also comprises luminous indicators 20, which are visible to an operator keeping watch over the loading area 4, when the carriage 12 is situated in correspondence of the loading area itself. In the example, which is non-limiting, the luminous indicators 20 are luminous spots 14a, 15a, 16a, 17a each generated on a seat 14, 15, 16, 17 of the carriage 12 by a respective light beam 22a, 23a, 24a, 25a which is projected by a respective light source 21, in particular four spot lamps 22, 23, 24 and 25, which are mounted on the frame 10 and each positioned so as to direct, when activated or lit, the respective light beam towards a visible surface of a seat.

It should be noted that the light spots 14a, 15a, 16a, 17a are visible to the operator who is standing in the loading area 4 since they form respective luminous orbs, on the visible outer surface of the respective seat 14, 15, 16 and 17 and, in the example, on the conveyor belt 18 of the seat itself.

The system is completed by a control apparatus, which is schematically denoted by 26 and is able to recognize each object 2 which arrives in the loading area 4 and therefore know its destination, is able to activate the luminous indicator 20 for the seat where the operator should readily place the object 2 and is able to activate the drive means 19 of the unloading means 18 for the seat, so as to unload into the chute the object towards its destination, when the carriage is situated in correspondence of the corresponding chute 6 or 7.

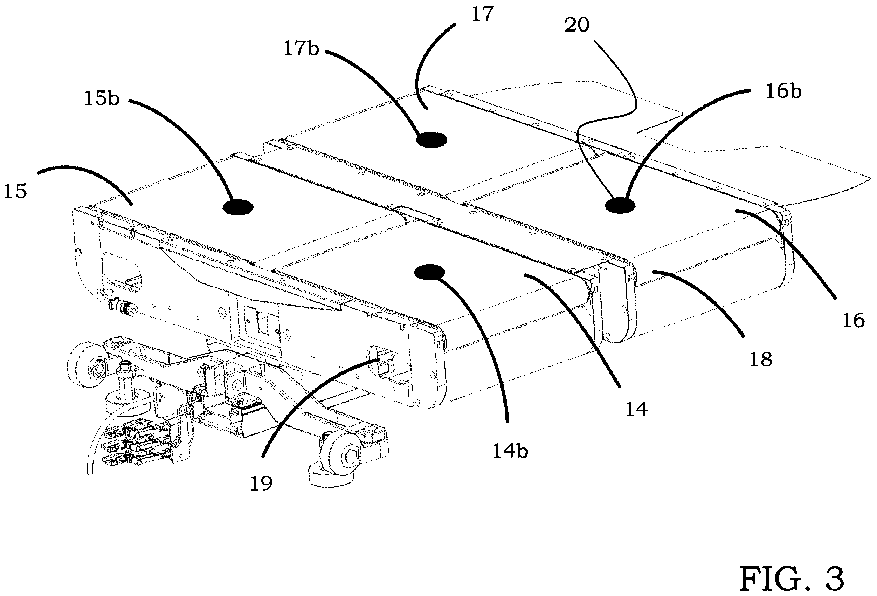

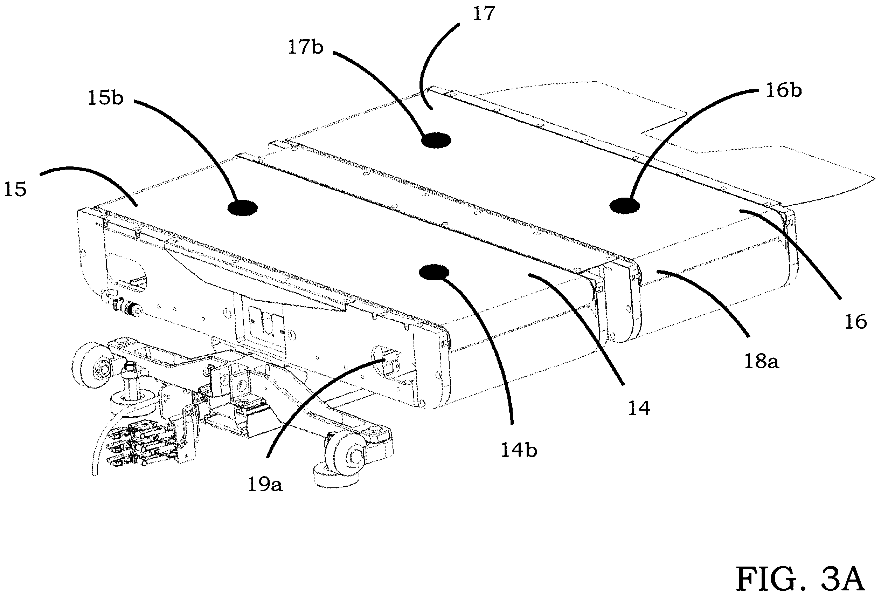

In an alternative embodiment of the invention, illustrated with reference to Figure 3, the luminous indicator 20 may be a light source 14b, 15b, 16b, 17b which is positioned underneath a respective seat 14, 15, 16 and 17 and is visible through the seat by the operator who is standing in the loading area.

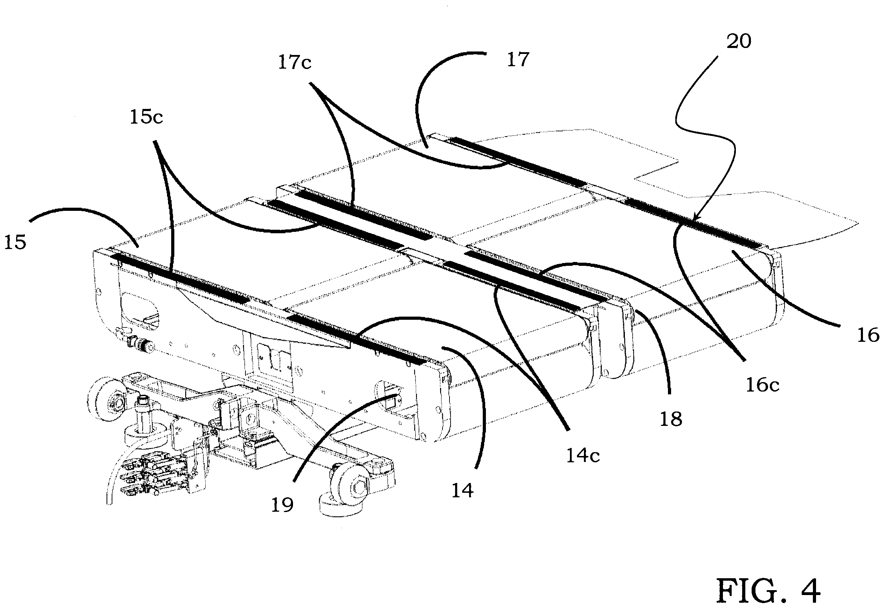

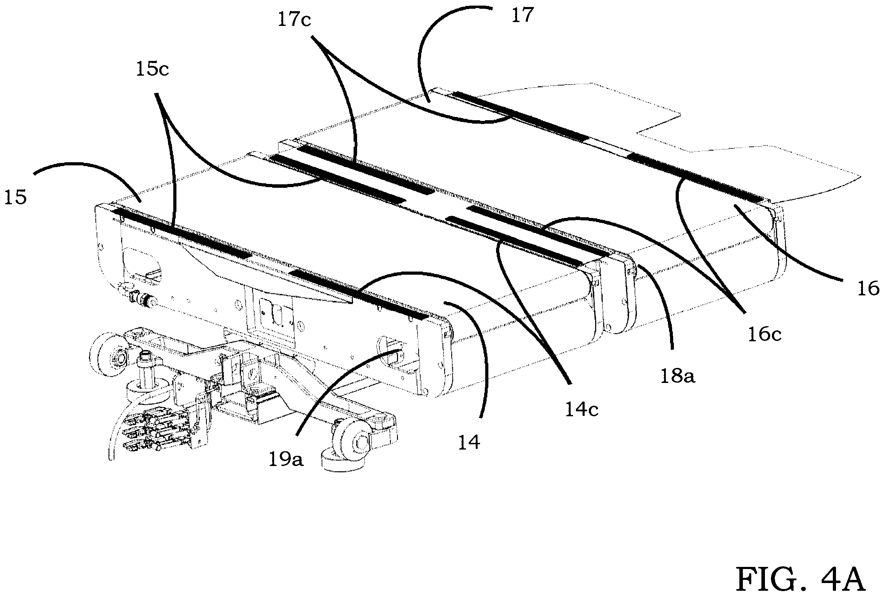

In a further alternative embodiment of the invention, shown with reference to Figure 4, the luminous indicator 20 may be a luminous frame element 14c, 15c, 16c, 17c extending along at least one peripheral portion of each seat 14, 15, 16, 17 and in particular along the opposite sides of the conveyor belt 18.

It should be noted that, according to an alternative embodiment, the unloading means 18 of adjacent pairs of seats, 14 and 15 or 16 and 17, consist of a single conveyor belt 18a controlled by reversible drive means 19a, so as to unload as required an object on the right-hand side or an object on the left-hand side or, if necessary unload two objects situated in adjacent seats both on the right-hand side or both on the left-hand side.

This constructional variation is shown in Figures 2A, 3A and 4A for the embodiments shown in Figures 2, 3 and 4, respectively, the corresponding parts retaining the same reference numbers.

The operating principle of the system according to the invention is described hereinbelow with reference to an instant where an object 2 reaches the loading area 4, the operator is monitoring said area, the carriage 12 is situated in correspondence of the loading area 4, the unloading means 18 are at a standstill and the indicators 20 are deactivated and the control apparatus 26 has been supplied with all the information necessary for sorting the objects 2 intended to reach the loading area 4.

When the object 2 reaches the loading area 4, it is recognized by the control apparatus 26 which lights up a spot lamp, for example 22, so that a luminous spot 14a is formed on the visible surface of the appropriate seat, namely the seat 14: at this point the operator picks up the incoming object 2 and deposits it on the seat 14 where there is the luminous spot 14a. In other words, in accordance with the invention, positioning of the object is performed in the desired seat because the operator is guided during his/her manual movements by lighting-up of the luminous indicator 20 on said seat.

At this point the carriage 12 continues along its travel path until it reaches the predefined chute, for example a chute 6, and the control apparatus 26 then activates the drive means 19 of the unloading means 18, thereby causing unloading of the object 2 into the discharge chute 6.

It goes without saying that not just a single seat may be filled, but if necessary all four seats of the carriage 12 may be filled with respective objects, before the carriage 12 is displaced towards the discharge chutes.

This therefore results in a method for manually displacing an object, in an object handling system, from a loading area to a conveyor of the handling system, characterized by automatically detecting the destination of the object when it arrives in the loading area and activating a luminous signal on the seat of the conveyor which relates to that destination and where the object should be loaded, in particular lighting up a luminous indicator on said seat.

The main advantage of the system according to the present invention consists in its high capacity to sort quickly a large number of objects. In fact all the objects which reach one-by-one the loading area are unloaded into the chutes for which they are intended, without being conveyed back to the said loading area. In particular, all the objects intended for the chutes which are situated on one side of the conveyor are arranged in seats of the carriage which are situated on the same side. In other words, the objects intended for right-hand chutes will be immediately arranged in the right-hand seats and those intended for left-hand chutes will be arranged in left-hand seats.

Obviously, a person skilled in the art, in order to satisfy any specific requirements which arise, may make numerous modifications and variations to the system described above, the scope of protection of the invention being defined by the following claims.

## Claims

1. Object handling system for sorting objects, comprising a loading area (4), a continuous type conveyor (5), a plurality of discharge chutes (6, 7) arranged at intervals along the sides of the conveyor (5), a plurality of carriages, each carriage (12) having at least one pair of adjacent seats (14, 15; 16, 17) for receiving respective objects and movable along the conveyor (5) from a position in correspondence of the loading area (4), for receiving at least one object (2) arriving in the loading area (4), to a position in correspondence of a discharge chute (6, 7), for unloading into the discharge chute (6, 7) said at least one object (2), as well as a control apparatus (26) able to recognize said at least one object (2) arriving from the loading area (4) and cause unloading of said at least one object (2) from said seat (14, 15; 16, 17) into the chute (6, 7) when the carriage is situated in correspondence of the discharge chute (6, 7) towards which said at least one object (2) is to be conveyed,
**characterized in that** the object handling system comprises furthermore a light source (22-25) emitting a light beam directed towards the visible surface of each seat (14-17) and forming a corresponding luminous spot (14a-17a) visible to an operator who is standing in the loading area (4) and a control apparatus (26) for selectively activating said light source (22-25) so as to indicate to the operator the seat of said at least pair of seats (14, 15; 16, 17) on which said at least one object (2) should be manually deposited by the operator, by lighting up said light source (22-25) when the carriage (12) is located in correspondence of the loading area (4).

2. Object handling system for sorting objects, comprising a loading area (4), a continuous type conveyor (5), a plurality of discharge chutes (6, 7) arranged at intervals along the sides of the conveyor (5), a plurality of carriages, each carriage (12) having at least one pair of adjacent seats (14, 15; 16, 17) for receiving respective objects and movable along the conveyor (5) from a position in correspondence of the loading area (4), for receiving at least one object (2) arriving in the loading area (4), to a position in correspondence of a discharge chute (6, 7), for unloading into the discharge chute (6, 7) said at least one object (2), as well as a control apparatus (26) able to recognize said at least one object (2) arriving from the loading area (4) and cause unloading of said at least one object (2) from said seat (14, 15; 16, 17) into the chute (6, 7) when the carriage is situated in correspondence of the discharge chute (6, 7) towards which said at least one object (2) is to be conveyed,
**characterized in that** the object handling system comprises furthermore a light source (14b-17b) arranged underneath each seat visible through said seat to an operator who is standing in the loading area (4) and a control apparatus (26) for selectively activating said light source (14b-17b) so as to indicate to the operator the seat of said at least pair of seats (14, 15; 16, 17) on which said at least one object (2) should be manually deposited by the operator, by lighting up said light source (14b-17b) of said seat when the carriage (12) is located in correspondence of the loading area (4).

3. Object handling system for sorting objects, comprising a loading area (4), a continuous type conveyor (5), a plurality of discharge chutes (6, 7) arranged at intervals along the sides of the conveyor (5), a plurality of carriages, each carriage (12) having at least one pair of adjacent seats (14, 15; 16, 17) for receiving respective objects and movable along the conveyor (5) from a position in correspondence of the loading area (4), for receiving at least one object (2) arriving in the loading area (4), to a position in correspondence of a discharge chute (6, 7), for unloading into the discharge chute (6, 7) said at least one object (2), as well as a control apparatus (26) able to recognize said at least one object (2) arriving from the loading area (4) and cause unloading of said at least one object (2) from said seat (14, 15; 16, 17) into the chute (6, 7) when the carriage is situated in correspondence of the discharge chute (6, 7) towards which said at least one object (2) is to be conveyed,
**characterized in that** the object handling system comprises furthermore a luminous frame element (14c-17c) extending along at least one peripheral portion of each seat (14, 15; 16, 17) visible to an operator who is standing in the loading area (4) and a control apparatus (26) for selectively activating said luminous frame element (14c-17c) so as to indicate to the operator the seat of said at least pair of seats (14, 15; 16, 17) on which said at least one object (2) should be manually deposited by the operator, by lighting up said luminous frame element (14c-17c) of said seat when the carriage (12) is located in correspondence of the loading area (4).

4. Object handling system according to any of the preceding claims, **characterized in that** each seat (14-17) is provided with unloading means (18, 18a) which are controlled by the action of drive means (19, 19a) for unloading said at least one object (2) into said chute (6, 7).

5. Object handling system according to claim 4, **characterized in that** said unloading means comprise a conveyor belt (18) associated with each of said seats (14, 15; 16, 17).

6. Object handling device according to claim 4, **characterized in that** said unloading means comprise a conveyor belt (18a) associated with said pair of seats (14, 15; 16, 17).

7. Method for manually depositing an object from a loading area to a continuous type conveyor (5) in an object handling system according to any of the preceding claims comprising the steps of automatically detecting the destination of the object (2) when it arrives in the loading area (4), and automatically signalling a seat (14-17) of a carriage (12) of the conveyor (5) which relates to that destination and where the object (2) should be loaded by lighting-up a light source (22-25; 14b-17b) or luminous frame element (14c-17c) when the carriage (12) is located in correspondence of the loading area (4).

## Patentansprüche

1. Objekthandhabungssystem zum Sortieren von Objekten, umfassend einen Ladebereich (4), einen Stetigförderer (5), mehrere Ausgaberutschen (6, 7), die in Intervallen entlang der Seiten des Förderers (5) angeordnet sind, mehrere Schlitten, wobei jeder Schlitten (12) zumindest ein Paar von benachbarten Sitzen (14, 15; 16, 17) zum Aufnehmen von jeweiligen Objekten aufweist und den Förderer (5) entlang aus einer Position in Entsprechung zum Ladebereich (4) zum Aufnehmen von zumindest einem Objekt (2), das im Ladebereich (4) ankommt, zu einer Position in Entsprechung zu einer Ausgaberutsche (6, 7) zum Abladen des zumindest einen Objekts (2) in die Ausgaberutsche (6, 7) beweglich ist, sowie eine Steuervorrichtung (26), die zum Erkennen des zumindest einen Objekts (2), das aus dem Ladebereich (4) ankommt, und zum Bewirken des Abladens des zumindest einen Objekts (2) vom Sitz (14, 15; 16, 17) in die Rutsche (6, 7) imstande ist, wenn sich der Schlitten in Entsprechung zur Ausgaberutsche (6, 7) befindet, zu der das zumindest eine Objekt (2) befördert werden soll,
**dadurch gekennzeichnet, dass** das Objekthandhabungssystem zudem eine Lichtquelle (22 bis 25), die einen Lichtstrahl aussendet, der zur sichtbaren Oberfläche jeden Sitzes (14 bis 17) hin gerichtet ist und einen entsprechenden Leuchtpunkt (14a bis 17a) ausbildet, der für eine Bedienungsperson, die im Ladebereich (4) steht, sichtbar ist, und eine Steuervorrichtung (26) zum selektiven Aktivieren der Lichtquelle (22 bis 25) umfasst, um der Bedienungsperson den Sitz des zumindest einen Paars von Sitzen (14, 15; 16, 17) anzuzeigen, auf dem das zumindest eine Objekt (2) manuell durch die Bedienungsperson abgelegt werden sollte, durch Einschalten der Lichtquelle (22 bis 25), wenn sich der Schlitten (12) in Entsprechung zum Ladebereich (4) befindet.

2. Objekthandhabungssystem zum Sortieren von Objekten, umfassend einen Ladebereich (4), einen Stetigförderer (5), mehrere Ausgaberutschen (6, 7), die in Intervallen entlang der Seiten des Förderers (5) angeordnet sind, mehrere Schlitten, wobei jeder Schlitten (12) zumindest ein Paar von benachbarten Sitzen (14, 15; 16, 17) zum Aufnehmen von jeweiligen Objekten aufweist und den Förderer (5) entlang aus einer Position in Entsprechung zum Ladebereich (4) zum Aufnehmen von zumindest einem Objekt (2), das im Ladebereich (4) ankommt, zu einer Position in Entsprechung zu einer Ausgaberutsche (6, 7) zum Abladen des zumindest einen Objekts (2) in die Ausgaberutsche (6, 7) beweglich ist, sowie eine Steuervorrichtung (26), die zum Erkennen des zumindest einen Objekts (2), das aus dem Ladebereich (4) ankommt, und zum Bewirken des Abladens des zumindest einen Objekts (2) vom Sitz (14, 15; 16, 17) in die Rutsche (6, 7) imstande ist, wenn sich der Schlitten in Entsprechung zur Ausgaberutsche (6, 7) befindet, zu der das zumindest eine Objekt (2) befördert werden soll,
**dadurch gekennzeichnet, dass** das Objekthandhabungssystem zudem eine Lichtquelle (14b bis 17b), die unter jedem Sitz angeordnet und durch den Sitz hindurch für eine Bedienungsperson, die im Ladebereich (4) steht, sichtbar ist, und eine Steuervorrichtung (26) zum selektiven Aktivieren der Lichtquelle (14b bis 17b) umfasst, um der Bedienungsperson den Sitz des zumindest einen Paars von Sitzen (14, 15; 16, 17) anzuzeigen, auf dem das zumindest eine Objekt (2) manuell durch die Bedienungsperson abgelegt werden sollte, durch Einschalten der Lichtquelle (14b bis 17b) des Sitzes, wenn sich der Schlitten (12) in Entsprechung zum Ladebereich (4) befindet.

3. Objekthandhabungssystem zum Sortieren von Objekten, umfassend einen Ladebereich (4), einen Stetigförderer (5), mehrere Ausgaberutschen (6, 7), die in Intervallen entlang der Seiten des Förderers (5) angeordnet sind, mehrere Schlitten, wobei jeder Schlitten (12) zumindest ein Paar von benachbarten Sitzen (14, 15; 16, 17) zum Aufnehmen von jeweiligen Objekten aufweist und den Förderer (5) entlang aus einer Position in Entsprechung zum Ladebereich (4) zum Aufnehmen von zumindest einem Objekt (2), das im Ladebereich (4) ankommt, zu einer Position in Entsprechung zu einer Ausgaberutsche (6, 7) zum Abladen des zumindest einen Objekts (2) in die Ausgaberutsche (6, 7) beweglich ist, sowie eine Steuervorrichtung (26), die zum Erkennen des zumindest einen Objekts (2), das aus dem Ladebereich (4) ankommt, und zum Bewirken des Abladens des zumindest einen Objekts (2) vom Sitz (14, 15; 16, 17) in die Rutsche (6, 7) imstande ist, wenn sich der Schlitten in Entsprechung zur Ausgaberutsche (6, 7) befindet, zu der das zumindest eine Objekt (2) befördert werden soll,
**dadurch gekennzeichnet, dass** das Objekthandhabungssystem zudem ein Leuchtrahmenelement (14c bis 17c), das entlang von zumindest einem Umfangsabschnitt von jedem Sitz (14, 15; 16, 17) verläuft und für eine Bedienungsperson, die im Ladebereich (4) steht, sichtbar ist, und eine Steuervorrichtung (26) zum selektiven Aktivieren des Leuchtrahmenelements (14c bis 17c) umfasst, um der Bedienungsperson den Sitz des zumindest einen Paars von Sitzen (14, 15; 16, 17) anzuzeigen, auf dem das zumindest eine Objekt (2) manuell durch die Bedienungsperson abgelegt werden sollte, durch Einschalten des Leuchtrahmenelements (14c bis 17c) des Sitzes, wenn sich der Schlitten (12) in Entsprechung zum Ladebereich (4) befindet.

4. Objekthandhabungssystem nach einem der vorhergehenden Ansprüche, **dadurch gekennzeichnet, dass** jeder Sitz (14 bis 17) mit Ablademitteln (18, 18a) versehen ist, die durch die Einwirkung von Antriebsmitteln (19, 19a) zum Abladen des zumindest einen Objekts (2) in die Rutsche (6, 7) gesteuert sind.

5. Objekthandhabungssystem nach Anspruch 4, **dadurch gekennzeichnet, dass** die Ablademittel ein Förderband (18) umfassen, das mit jedem der Sitze (14, 15; 16, 17) assoziiert ist.

6. Objekthandhabungssystem nach Anspruch 4, **dadurch gekennzeichnet, dass** die Ablademittel ein Förderband (18a) umfassen, das mit dem Paar von Sitzen (14, 15; 16, 17) assoziiert ist.

7. Verfahren zum manuellen Absetzen eines Objekts von einem Ladebereich zu einem Stetigförderer (5) in einem Objekthandhabungssystem nach einem der vorhergehenden Ansprüche, umfassend die Schritte des automatischen Erkennens des Bestimmungsorts des Objekts (2), wenn es im Ladebereich (4) ankommt, und des automatischen Signalisierens eines Sitzes (14 bis 17) eines Schlittens (12) des Förderers (5), das auf diesen Bestimmungsort bezogen ist und wo das Objekt (2) geladen werden sollte, durch Einschalten einer Lichtquelle (22 bis 25; 14b bis 17b) oder eines Leuchtrahmenelements (14c bis 17c), wenn sich der Schlitten (12) in Entsprechung zum Ladebereich (4) befindet.

## Revendications

1. Système de manutention d'objets, comprenant une aire de chargement (4), un convoyeur (5) de type continu, une pluralité de rigoles (6, 7) de déchargement disposées à des intervalles le long des côtés du convoyeur (5), une pluralité de chariots, chaque chariot (12) ayant au moins une paire de sièges adjacents (14, 15; 16, 17) pour recevoir des objets respectifs et mobiles le long du convoyeur (5) à partir d'une position en correspondance de l'aire de chargement (4), pour recevoir au moins un objet (2) arrivant dans l'aire de chargement (4), à une position en correspondance d'une rigole (6, 7) de déchargement, pour décharger dans la rigole (6, 7) de déchargement ledit au moins un objet (2), ainsi qu'un appareil de commande (26) capable de reconnaître ledit au moins un objet (2) arrivant de l'aire de chargement (4) et de provoquer le déchargement dudit au moins un objet (2) dudit siège (14, 15; 16, 17) dans la rigole (6, 7) lorsque le chariot est situé en correspondance avec la rigole (6, 7) de déchargement vers laquelle ledit au moins un objet (2) doit être acheminé, **caractérisé en ce que** le système de manutention d'objets comprend en outre une source lumineuse (22-25) émettant un faisceau lumineux dirigé vers la surface visible de chaque siège (14-17) et formant un spot lumineux (14a-17a) correspondant visible par un opérateur qui se tient dans l'aire de chargement (4) et un appareil de commande (26) pour activer sélectivement ladite source lumineuse (22-25) de manière à indiquer à l'opérateur le siège de ladite au moins une paire de sièges (14, 15; 16, 17) sur lequel ledit au moins un objet (2) doit être déposé manuellement par l'opérateur, en allumant ladite source lumineuse (22-25) lorsque le chariot (12) est localisé en correspondance avec l'aire de chargement (4).

2. Système de manutention d'objets, comprenant une aire de chargement (4), un convoyeur (5) de type continu, une pluralité de rigoles (6, 7) de déchargement disposées à des intervalles le long des côtés du convoyeur (5), une pluralité de chariots, chaque chariot (12) ayant au moins une paire de sièges adjacents (14, 15; 16, 17) pour recevoir des objets respectifs et mobiles le long du convoyeur (5) à partir d'une position en correspondance de l'aire de chargement (4), pour recevoir au moins un objet (2) arrivant dans l'aire de chargement (4), à une position en correspondance d'une rigole (6, 7) de déchargement, pour décharger dans la rigole (6, 7) de déchargement ledit au moins un objet (2), ainsi qu'un appareil de commande (26) capable de reconnaître ledit au moins un objet (2) arrivant de l'aire de chargement (4) et de provoquer le déchargement dudit au moins un objet (2) dudit siège (14, 15; 16, 17) dans la rigole (6, 7) lorsque le chariot est situé en correspondance avec la rigole (6, 7) de déchargement vers laquelle ledit au moins un objet (2) doit être acheminé, **caractérisé en ce que** le système de manutention d'objets comprend en outre une source lumineuse (14b-17b) disposée sous chaque siège et visible à travers ledit siège pour un opérateur se tenant dans l'aire de chargement (4) et un appareil de commande (26) pour activer sélectivement ladite source lumineuse (14b-17b) de manière à indiquer à l'opérateur le siège de ladite au moins une paire de sièges (14, 15 ; 16, 17) sur lequel ledit au moins un objet (2) doit être déposé manuellement par l'opérateur, en allumant ladite source lumineuse (14b-17b) dudit siège lorsque le chariot (12) est localisé en correspondance avec l'aire de chargement (4).

3. Système de manutention d'objets, comprenant une aire de chargement (4), un convoyeur (5) de type continu, une pluralité de rigoles (6, 7) de déchargement disposées à des intervalles le long des côtés du convoyeur (5), une pluralité de chariots, chaque chariot (12) ayant au moins une paire de sièges adjacents (14, 15; 16, 17) pour recevoir des objets respectifs et mobiles le long du convoyeur (5) à partir d'une position en correspondance de l'aire de chargement (4), pour recevoir au moins un objet (2) arrivant dans l'aire de chargement (4), à une position en correspondance d'une rigole (6, 7) de déchargement, pour décharger dans la rigole (6, 7) de déchargement ledit au moins un objet (2), ainsi qu'un appareil de commande (26) capable de reconnaître ledit au moins un objet (2) arrivant de l'aire de chargement (4) et de provoquer le déchargement dudit au moins un objet (2) dudit siège (14, 15; 16, 17) dans la rigole (6, 7) lorsque le chariot est situé en correspondance avec la rigole (6, 7) de déchargement vers laquelle ledit au moins un objet (2) doit être acheminé, **caractérisé en ce que** le système de manutention d'objets comprend en outre un élément de cadre lumineux (14c-17c) s'étendant le long d'au moins une partie périphérique de chaque siège (14, 15; 16, 17) visible pour un opérateur se tenant dans l'aire de chargement (4) et un appareil de commande (26) pour activer sélectivement ledit élément de cadre lumineux (14c-17c) de manière à indiquer à l'opérateur le siège de ladite au moins une paire de sièges (14, 15; 16, 17) sur lequel ledit au moins un objet (2) doit être déposé manuellement par l'opérateur, en allumant ledit élément de cadre lumineux (14c-17c) dudit siège lorsque le chariot (12) est localisé en correspondance avec l'aire de chargement (4).

4. Système de manutention d'objets selon l'une quelconque des revendications précédentes, **caractérisé en ce que** chaque siège (14-17) est pourvu de moyens de déchargement (18, 18a) qui sont commandés par l'action de moyens d'entraînement (19, 19a) pour décharger ledit au moins un objet (2) dans ladite rigole (6, 7).

5. Système de manutention d'objets selon la revendication 4, **caractérisé en ce que** lesdits moyens de déchargement comprennent une bande transporteuse (18) associée à chacun desdits sièges (14, 15; 16, 17).

6. Système de manutention d'objets selon la revendication 4, **caractérisé en ce que** lesdits moyens de déchargement comprennent une bande transporteuse (18a) associée à ladite paire de sièges (14, 15; 16, 17).

7. Procédé pour déposer manuellement un objet d'une aire de chargement vers un convoyeur (5) de type continu dans un système de manutention d'objets selon l'une des revendications précédentes, comprenant les étapes de détection automatique de la destination de l'objet (2) lorsqu'il arrive dans l'aire de chargement et la signalisation automatique d'un siège (14-17) d'un chariot (12) du convoyeur (5) qui se rapporte à cette destination et à l'endroit où l'objet (2) doit être chargé en allumant une source lumineuse (22-25 ; 14b-17b) ou un élément de cadre lumineux (14c-17c) lorsque le chariot (12) est localisé en correspondance de l'aire de chargement (4).
